# EUROPEAN PATENT APPLICATION

(11) **EP 4 763 325 A1**
(43) Date of publication of application: **24.06.2026**
(21) Application number: 24222399.8
(22) Date of filing: 20.12.2024
(51) Int. Cl.: B01J 4/00, B01J 19/08

(54) **THERMAL REACTOR WITH CONVERGING AND DIVERGING FLOW**

(71) Applicant: Nitrocapt AB, 756 51 Uppsala (SE)
(72) Inventor: FORSBERG, Gustaf, 749 60 Örsundsbro (SE); MÜLLER, Leopold, 75443 Ötisheim (DE); SELVAKUMARAN, Arunkumar, 176 71 Järfälla (SE); Martin PORSTENDÖRFER, 745 99 Enköping (SE); Nishant KATYAL, 752 55 Uppsala (SE)
(74) Representative: Kransell & Wennborg KB

(57) **Abstract**

A thermal reactor arrangement and a method for the synthesis of nitrogen oxides (NOx) in a thermal reactor comprising a plasma chamber, a gas inlet for a main gas feed into said plasma chamber, a heater adjacent to a heating zone configured to heat said gas feed creating a plasma, a reaction zone for containing said plasma, and a gas outlet for exhaust gas, said gas inlet and gas outlet defining a direction of flow; an expansion chamber arranged downstream in fluid connection with said gas outlet, wherein said exhaust gas is led into a transition zone having a converging outlet, a throat, and a diverging portion, wherein the exhaust gas is accelerated to supersonic speed when passing said throat and entering into said expansion chamber.

## Description

### Technical field

The present disclosure relates to thermal reactors and thermal reactor arrangements for the synthesis of nitrogen oxides (NOx) and in particular to plasma synthesis of NO, NO₂ and HNOs, as well as to methods of operating such reactors and arrangements.

### Background

Plasma technology can be used to dissociate nitrogen and oxygen molecules, allowing them to recombine into reactive nitrogen species like nitrogen monoxide (NO), a precursor to nitrogen oxides (NOₓ) that can be further processed into nitric acid (HNOs). Plasma-based nitrogen fixation using thermal reactors presents an alternative, sustainable approach to ammonia production that circumvents the need for traditional high-pressure fossil fuel-based processes, such as the Haber-Bosch process.

The major advantage of plasma-based nitrogen fixation is its reliance on electrical energy, which can be sourced from renewable energy systems, making the process entirely COz-free if green electricity, for example geothermal energy, wind power or photovoltaics, is used. This offers a possibility of decentralized, small-scale ammonia production, particularly suited for areas with abundant renewable resources but limited infrastructure. Transition to plasma-based nitrogen fixation would significantly reduce the carbon emission footprint of agriculture.

There are also initiatives to reduce and eventually eliminate the carbon footprint of the Haber-Bosch process by utilizing renewable energy sources to power the reaction and to produce hydrogen via electrolysis. This approach maintains the scalability and efficiency of the traditional method while addressing its environmental drawbacks. This green transition depends heavily on the availability of low-cost, renewable electricity and large amounts of hydrogen produced in cost-effective electrolyzers. Despite being more sustainable, the Green Haber-Bosch process remains capital-intensive and primarily suited for centralized, large-scale production facilities. Unlike the large-scale Green Haber-Bosch process, plasma-based systems can be highly modular and adaptable to varying production scales. Plasma technology is however associated with other challenges, and there is a need for developing energy efficient, safe, and scalable processes.

There is a specific need for developing new configurations of the plasma reactor and downstream equipment to address the challenges associated with the high pressure and high temperature of the gas mixture, and with the aim to better control the reaction kinetics.

### Summary

The present inventors realized the importance of the configuration of the transition going from a plasma reactor to an expansion chamber, and surprisingly found significant advantages associated with particular designs, as outlined in the attached claims, and as described in further detail in the following summary, description, and drawings.

One aspect of the present disclosure thus relates to a thermal reactor arrangement for the synthesis of nitrogen oxides (NOx), said reactor arrangement comprising a plasma chamber, a gas inlet for a main gas feed into said plasma chamber, a heater adjacent to a heating zone configured to heat said gas feed creating a plasma, a plasma-generation zone, a reaction zone for containing a plasma, and a gas outlet for exhaust gas, said gas inlet and gas outlet defining a direction of flow, an expansion chamber arranged downstream in fluid connection with said gas outlet, said expansion chamber further comprising an outlet configured to release expanded gas, wherein said plasma chamber comprises a transition zone leading to a converging outlet, a throat, and a diverging portion opening into said expansion chamber.

According to an embodiment of said first aspect, the converging outlet has a shape chosen from a tapered cone, a rounded cone, a bell-shaped cone, a flared or curved cone, or a combination thereof, defining a flow channel narrowing in the direction of the flow.

According to another embodiment of said first aspect, freely combinable with the above, said diverging portion has a shape chosen from a tapered cone, a rounded cone, a bell-shaped cone, a flared or curved cone, or a combination thereof, defining a flow channel expanding in the direction of the flow and opening into said expansion chamber.

According to a specific embodiment of said first aspect, said throat coincides with the opening into the expansion chamber and said diverging portion is thus configured as an immediate release into said expansion chamber. This embodiment is preferably combined with converging outlet having shape chosen from a tapered cone, a rounded cone, a bell-shaped cone, a flared or curved cone, or a combination thereof, defining a flow channel narrowing in the direction of the flow, at the end of which the gas is released into the expansion chamber.

According to a preferred embodiment of the first aspect, the outlet and/or the transition from a plasma reactor to an expansion chamber is configured as or comprises a converging-diverging nozzle, also called a CD-nozzle. One example of such nozzles is the de Laval nozzle, which basically is an hour-glass shaped tube characterized by a rapid convergence, a throat, and a gradual divergence.

According to preferred embodiment of said first aspect, freely combinable with any of the above, said transition zone comprising a converging outlet, a throat, and a diverging portion, all independently or taken together, configured to create a pressure drop to a pressure in the expansion chamber which is about 30 to 70 % of the absolute pressure in the plasma chamber, preferably about 30 to 60 %, more preferably about 50 %, and most preferably about 40 % of the absolute pressure in the plasma chamber.

According to preferred embodiment, the pressure in the expansion chamber is at least 1 bar (100 kPa) absolute pressure.

According to preferred embodiment of said first aspect, the reactor arrangement comprises at least one port for tangentially introducing a secondary gas feed in addition to said main gas feed, said port arranged in said plasma chamber to create a swirl or vortex of gas surrounding the plasma in said reaction zone, wherein said swirl or vortex follows the direction of the main gas and maintains a swirling motion through the outlet and into the expansion chamber.

Preferably, said at least one port is positioned upstream of the heating zone.

Alternatively, said at least one port is positioned between the heating zone and the outlet into the expansion chamber.

According to yet another embodiment, freely combinable with any of the above, at least one port for introducing a quenching medium is arranged in the expansion chamber for tangentially introducing quenching medium into the expanded gas, said port arranged in said expansion chamber to create a swirl or vortex of gas, wherein said swirl or vortex follows the direction of the main gas and maintains a swirling motion through the expansion chamber.

According to a further embodiment, freely combinable with any of the above, said at least one port for introducing a quenching medium is arranged in a position chosen from
- a position in the wall of the diverging portion of the transition zone;
- a position in an end wall of the expansion chamber adjacent to the outlet; and
- a position in a side wall of the expansion chamber.

According to an embodiment, freely combinable with any of the above, said secondary gas and said quenching medium is the same or different, and is chosen from nitrogen, oxygen, air, and water; and wherein said quenching medium is introduced in the form of a liquid, a gas, or a mixture thereof.

A second aspect of the present disclosure relates to a method for the synthesis of nitrogen oxides (NOx) in a thermal reactor comprising a plasma chamber, a gas inlet for a main gas feed into said plasma chamber, a heater adjacent to a heating zone configured to heat said gas feed creating a plasma, a reaction zone for containing said plasma, and a gas outlet for exhaust gas, said gas inlet and gas outlet defining a direction of flow; an expansion chamber arranged downstream in fluid connection with said gas outlet, wherein said exhaust gas is led into a transition zone having a converging outlet, a throat, and a diverging portion, wherein the exhaust gas is accelerated to supersonic speed when passing said throat and entering into said expansion chamber.

According to an embodiment of said second aspect, the method is performed in a thermal reactor arrangement according to said first aspect and any embodiment thereof.

Further aspects and embodiments, as well as their advantages, will be apparent from the attached drawings and the detailed description.

### Short description of the drawings

The invention is now described, by way of example, with reference to the accompanying drawings, in which:

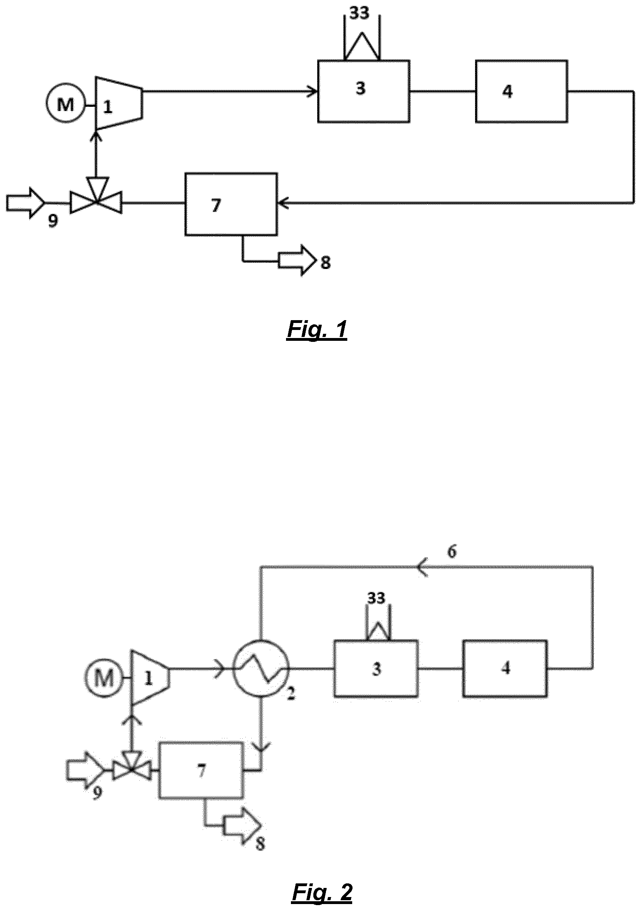

Figure 1 schematically shows a plasma-based nitrogen fixation process starting with a booster compressor (1) compressing a gas mixture comprising oxygen and nitrogen to a desired pressure. The compressed gas mixture is fed into a plasma reactor (3) equipped with a heater and heating zone (33) for generating a plasma. Said heater is chosen from a microwave generator, a radio wave generator, a laser generator, an inductively coupled plasma (ICP) or a transformer coupled plasma (TCP), and an electric discharge generator. Following the plasma reactor, the gas mixture is led into an expansion chamber (4) where it is subsequently quenched through the rapid reduction of pressure. The gas mixture is then led to downstream treatment (7), for example comprising an absorption column where the gas mixture reacts to form HNOs which is led to further processing (8) depending on the intended end product. Unreacted gas is recirculated, and fresh gases (9) fed into the process to maintain a constant feed into the reactor.
Figure 2 schematically shows an alternative single-pressure plasma-based nitrogen fixation process similar to that shown in Fig. 1, but where the gas mixture exiting the expansion chamber (4) are led (6) to a heat exchanger (2) where process heat is recovered and used to heat the compressed gas mixture before it enters the plasma reactor (3). After passing the heat exchanger, the gas mixture is led to downstream treatment (7), as in Fig. 1. Unreacted gas is recirculated, and fresh gases (9) fed into the process to maintain a constant feed into the reactor.

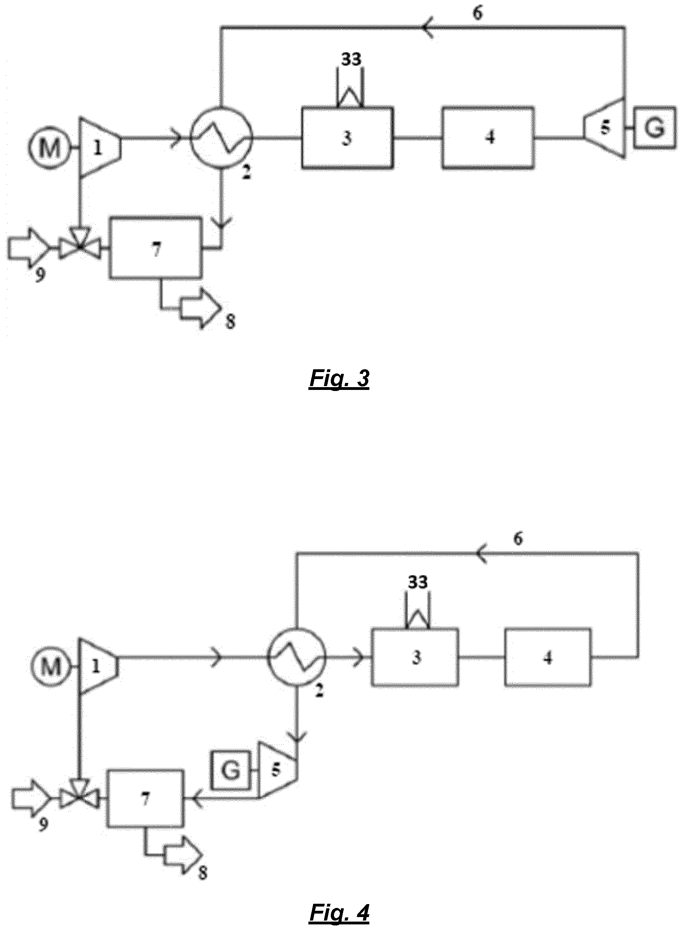

Figure 3 schematically shows a dual-pressure high-temperature plasma-based nitrogen fixation process, where gas leaving the expansion chamber (4) is led into one or more turbines (5) to improve energy recovery. The process thus features two primary pressure levels, a high-pressure level at the reactor (3) inlet and a lower pressure in the heat exchanger (2) as well as upstream of the treatment (7). The turbines, placed directly in the gas flow, expand the high-temperature, high-pressure gas, converting excess thermal energy into mechanical energy , which can be further converted into electricity. This results in a net energy gain, despite the increased work required for recompression.
Fig. 4 schematically shows a dual-pressure low-temperature plasma-based nitrogen fixation process, where gas leaving the expansion chamber (4) is first led to a heat-exchanger (2) before entering one or more turbines (5). In this set-up, the turbine operates under milder conditions, as the gases have transferred part of their thermal energy to the compressed gas in the heat exchanger (2), preheating it before it enters the plasma reactor (3). This set-up optimizes preheating efficiency, as the temperature is not constrained by the turbine's inlet temperature limit.

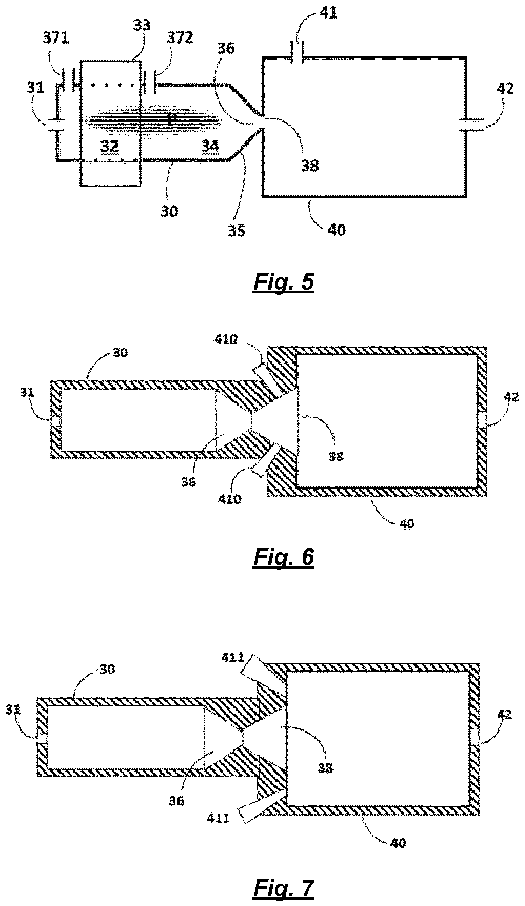

Fig. 5 shows a schematical cross-section of a plasma chamber (30) configured to hold a plasma (P) at a temperature and a pressure at which nitrogen and oxygen molecules dissociate, said plasma chamber (30) having a gas inlet (31) configured to introduce a gas mixture, a heater (33) and a heating zone (32) configured to heat said gas mixture to generate a plasma, a reaction zone (34) downstream of said plasma-generation zone (32), and a gas outlet (36) configured to release gas from said reaction zone (34) into an expansion chamber (40) arranged in fluid connection with said gas outlet (36), and at least one port (41), configured to introduce a quenching medium into said expansion chamber (40), and an outlet (42) configured to release expanded and quenched gas. Further, the plasma reactor or plasma chamber (30) has a transition zone (35) with an outlet comprising a converging outlet (36) and a diverging portion (38), said diverging portion here coinciding with an immediate release into the expansion chamber.
Further, Fig. 5 also illustrates how ports or inlets (371) and (372) are arranged in the plasma chamber (30) before and/or after the heating zone (33) and the plasma-generation zone. Said ports are configured to introduce a secondary gas into the plasma chamber. Preferably said secondary gas is introduced tangentially along the side walls of the plasma chamber, creating a swirling motion or vortex which then continues downstream. The flow and pressure of said secondary gas is preferably dimensioned such, that the resulting swirling flow continues through the outlet (36) and is discernible in the expansion chamber (40).
Fig. 6 illustrates schematically how one or more inlets (410) for introducing a quenching medium, are integrated in the downstream, diverging portion (38) of an outlet (36) leading into the expansion chamber (40) and thus feeding quenching medium into the expanded gas in an early phase of expansion. In Fig. 6, only two inlets are shown, but the number of inlets can be one, two, three or more, positioned symmetrically along the periphery of the downstream portion (38) of outlet (36). Also here, the early introduction of quenching media increases the efficiency of the expansion quenching, and additionally helps to center and stabilize the gas flow pattern within the expansion chamber (40) and also protects the walls of the diverging portion (38) of the outlet (36) and the inner walls of the expansion chamber.
Fig. 7 schematically illustrates an alternative configuration, where one or more inlets (411) are arranged in the end wall of the expansion chamber (40) to feed quenching medium into the expanded gas, adjacent to the diverging portion (38) opening into the expansion chamber (40). Through a symmetric arrangement of two or preferably three or more inlets (411), the flow of quenching medium will, in addition to effectively cool the gas, also help to center and stabilize the incoming plasma and the expanded gas.

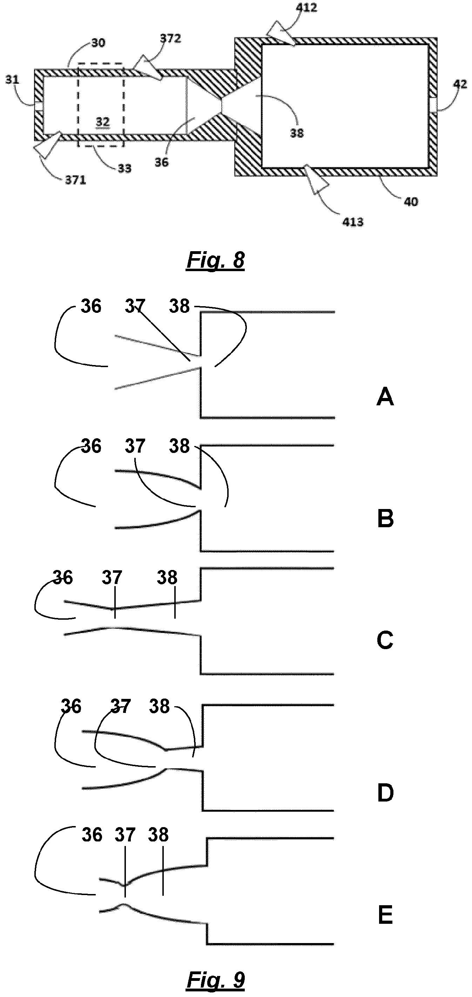

Fig. 8 schematically illustrates a configuration with multiple inlets; inlets for introducing a secondary gas into the plasma chamber, either upstream (371) or downstream (372) of a heater (33) and heating zone (32), as well as inlets (412, 413) for introducing quenching medium into the expansion chamber (40). The position and orientation of the first and second inlets (371, 372) indicate schematically that a secondary gas flow is introduced into the plasma chamber in a direction at least partially coinciding with the flow of feed gas, for example creating a swirl or vortex surrounding the flow of feed gas and continuing downstream in the plasma reactor. The second inlet (372) is indicated as positioned in the plasma chamber before the start of the converging part of the chamber, but is can also be arranged in the converging part. The position and orientation of the third inlet (412) indicates schematically that the quenching medium is introduced in a direction at least partially coinciding with the main flow of expanded gas, and the position and orientation of fourth inlet (413) indicates schematically that the quenching medium is introduced in a direction at least partially opposite to the main flow of expanded gas. Alternative positions and orientations are possible.
Fig. 9 schematically illustrates various exemplary geometries, where (A) shows an embodiment with a conical converging outlet (36) where the throat (37) coincides with the diverging portion (38) which here is an immediate opening into the expansion chamber; (B) shows an embodiment where the converging outlet (36) has the shape of a rounded cone, and where the throat (37) also coincides with the diverging portion (38), here is an immediate opening into the expansion chamber; (C) shows an embodiment where the converging outlet (36) has the shape of a cone, the diverging portion (38) has the shape of another cone with an opposite orientation, and the throat (37) is formed by the constriction where one cone transitions smoothly into the other; (D) shows an embodiment where the converging outlet (36) has the shape of a rounded cone, and the diverging portion (38) has the shape of a straight truncated cone, which opens up into the expansion chamber; and (E) shows an embodiment where the converging outlet (36) has the shape of a rapidly narrowing rounded or bell-shaped cone, and the diverging portion (38) has the shape of a more gradually opening rounded or bell-shaped cone, for example CD-nozzle or de Laval nozzle.

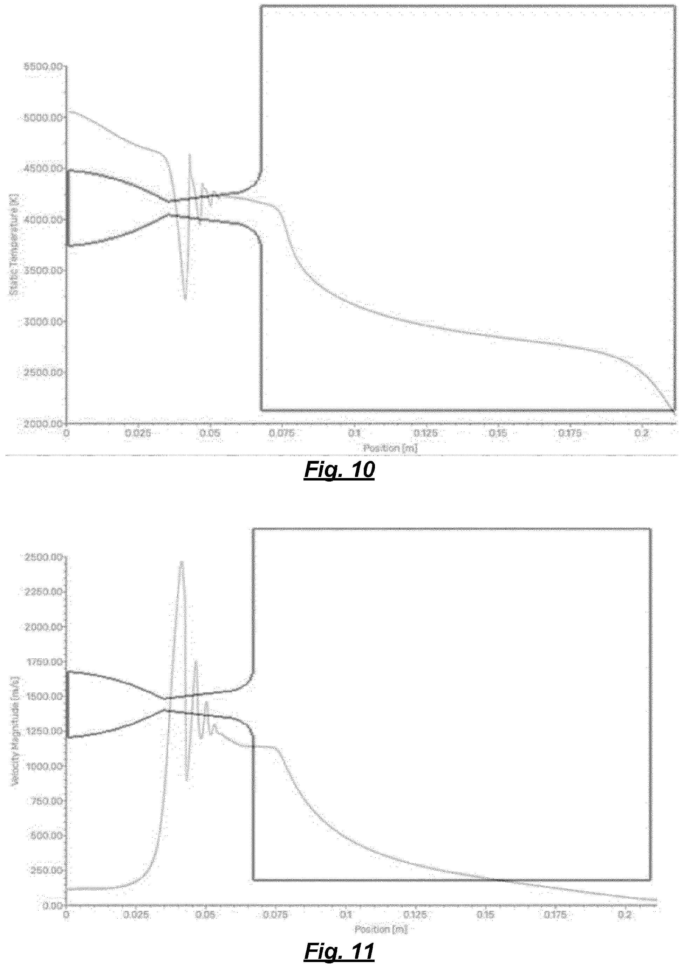

Fig. 10 is a graph showing an axial plot of static temperature (K) in the centre of the chamber as a function of the position (m) in a geometry as indicated in bold outline. An initial temperature of above 5000 K is rapidly reduced to about 3200 K and then to below 3000 K already within the first few centimetres of the expansion chamber.
Fig. 11 is a graph showing an axial plot of velocity (m/s) as a function of position (m) in the same geometry as in Fig. 10. The velocity reaches supersonic speeds immediately after passing the throat but then rapidly drops when advancing further into the expansion chamber.

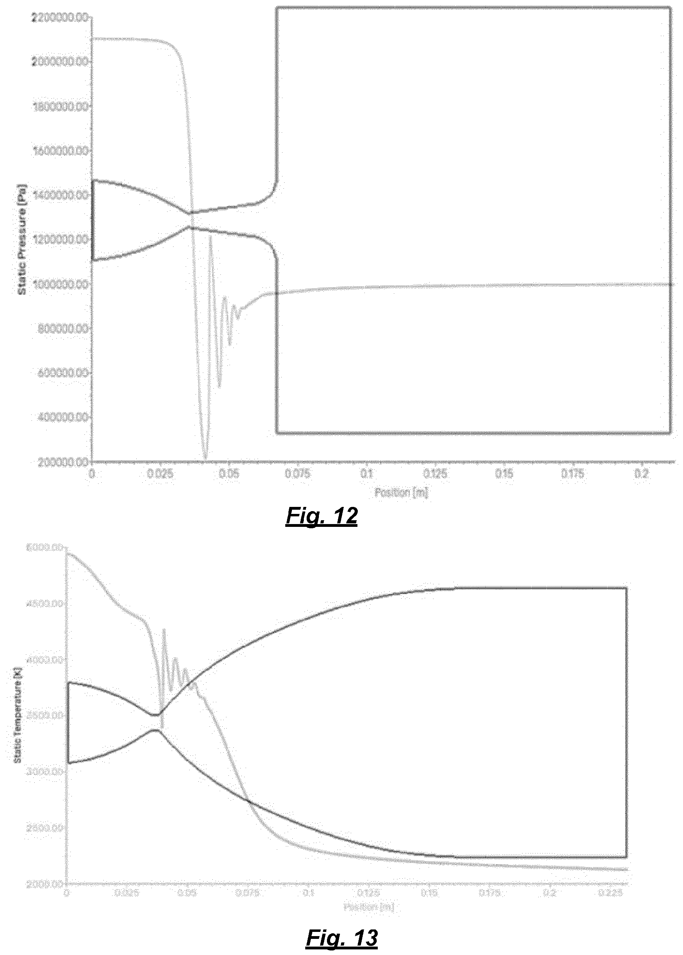

Fig. 12 is a graph showing an axial plot of static pressure (Pa) as a function of position (m) in the same geometry as in Fig. 10. The static pressure drops instantaneously from about 2100 kPa to about 200 kPa, then oscillates over a short distance, before stabilizing at about 900 kPa.
Fig. 13 shows an axial plot of static temperature (K) as a function of the position (m) in a different geometry, also indicated in bold outline, superimposed on the graph. An initial temperature of about 5000 K is rapidly reduced to about 3300 K and then to below 2500 K already within the first few centimetres of the expansion chamber.

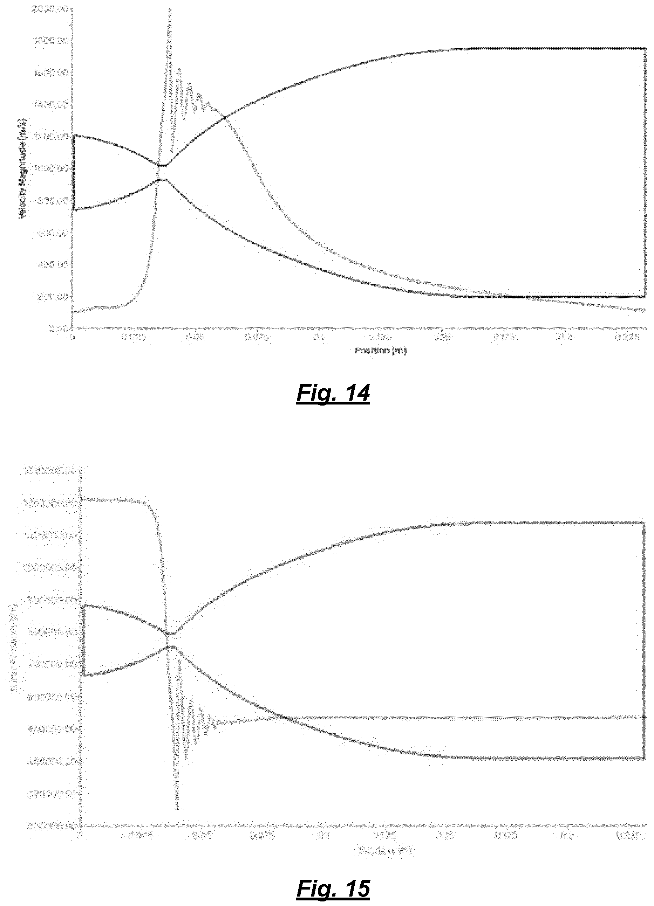

Fig. 14 is a graph showing an axial plot of velocity (m/s) as a function of position (m) in the same geometry as in Fig. 13. The velocity reaches supersonic speeds immediately after passing the throat but then rapidly drops when advancing further into the expansion chamber.
Fig. 15 is a graph showing an axial plot of static pressure (Pa) as a function of position (m) in the same geometry as in Fig. 13. The static pressure drops instantaneously from about 1200 kPa to between 200 and 300 kPa, then oscillates over a short distance, before stabilizing at about 500 kPa.

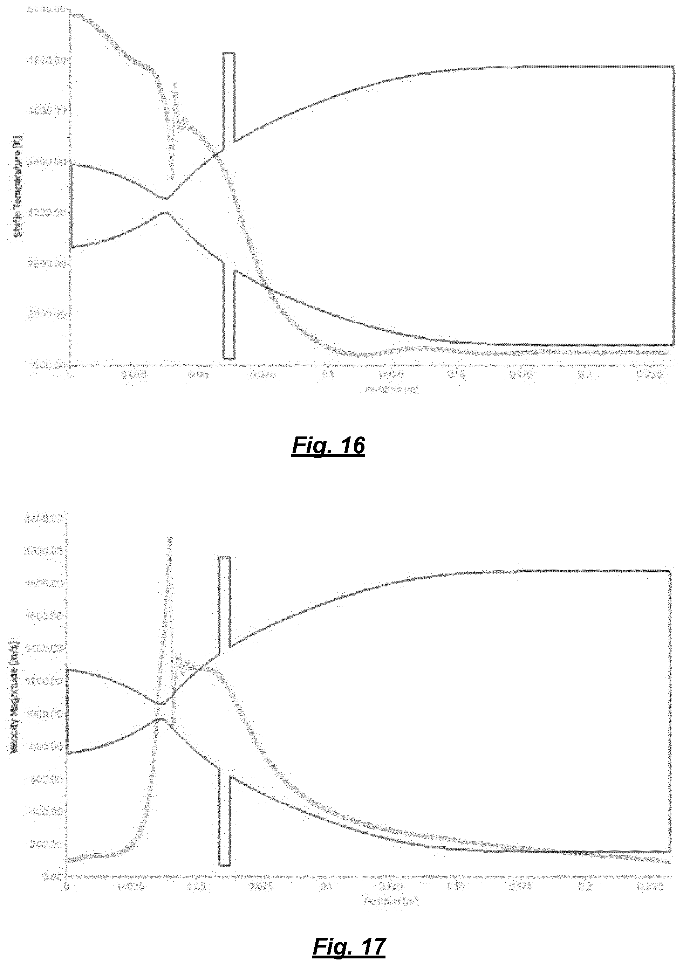

Fig. 16 shows an axial plot of static temperature (K) as a function of the position (m) in a different geometry, where two inlets for introducing quenching medium are arranged. An initial temperature of about 5000 K is rapidly reduced and then stabilized around 1600 K already within the first few centimetres of the expansion chamber.
Fig. 17 is a graph showing an axial plot of velocity (m/s) as a function of position (m) in the same geometry as in Fig. 16. It can be seen that the velocity oscillations are limited in duration and amplitude compared to other geometries, and compared to a situation without the introduction of quenching medium.

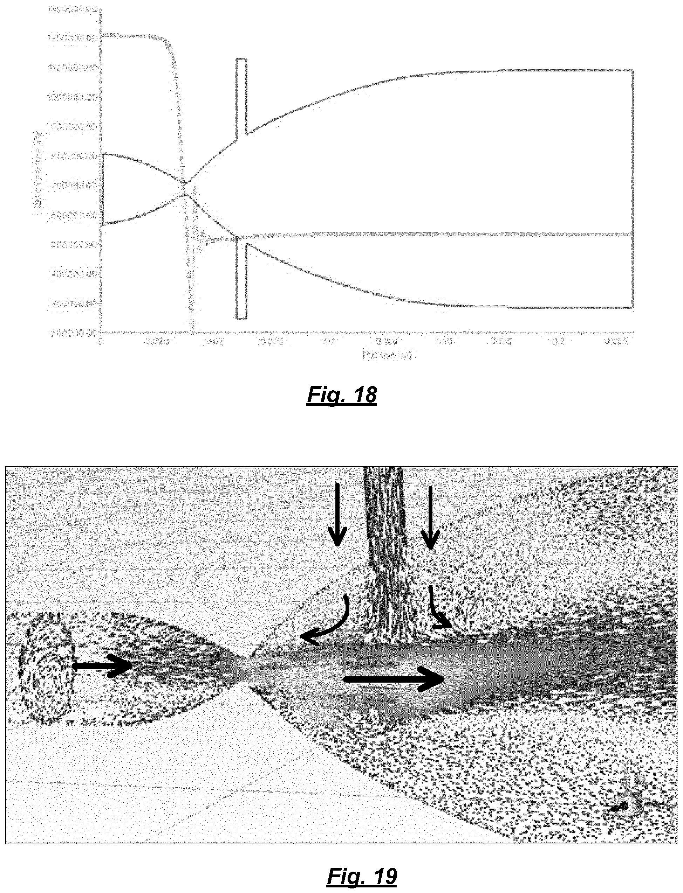

Fig. 18 is a graph showing an axial plot of static pressure (Pa) as a function of position (m) in the same geometry as in Fig. 16. The pressure drops rapidly from about 1200 kPa and stabilizes around 500 kPa after a short period of oscillating pressure. Again, it can be seen that the oscillations are limited in duration and amplitude compared to other geometries and compared to a situation without the introduction of quenching medium.
Fig. 19 shows the simulated flow pattern in an expansion chamber where a flow of quenching medium is introduced, resulting in efficient mixing, and turbulence (see the lower part of the figure). It can also be seen how the flow of quenching media (see the vertical arrows) goes partially in a direction opposite to the flow of gas entering the diverging section (see the left-hand side curved arrow) due to the Venturi effect.

### Detailed description

Before the present invention is described, it is to be understood that the terminology employed herein is used for the purpose of describing particular embodiments only and is not intended to be limiting, since the scope of the present invention will be limited only by the appended claims and equivalents thereof.

It must be noted that, as used in this specification and the appended claims, the singular forms "a," "an," and "the" include plural referents unless the context clearly dictates otherwise.

In the present specification and the appended claims, the term "about" is used to indicate a range of ±10% of the specified value, unless otherwise indicated in the context of the specific disclosure.

One aspect of the present invention thus relates to a thermal reactor arrangement for the synthesis of nitrogen oxides (NOx), said reactor arrangement comprising a plasma chamber (3, 30), a gas inlet (31) for a main gas feed into said plasma chamber (3, 30), a heater (33) adjacent to a heating zone (32) configured to heat said gas feed creating a plasma (P), a reaction zone (34) for containing a plasma, and a converging outlet (36) for exhaust gas, said gas inlet (31) and outlet (36) defining a direction of flow, an expansion chamber (4, 40) arranged downstream in fluid connection with said outlet (36), said expansion chamber (4, 40) further comprising an outlet (42) configured to release expanded gas, wherein said plasma chamber (3, 30) comprises a transition zone (35) leading to a converging outlet (36), a throat (37), and a diverging portion (38) opening into said expansion chamber (4, 40).

According to an embodiment of said first aspect, the converging outlet (36) has a shape chosen from a tapered cone, a rounded cone, a bell-shaped cone, a flared or curved cone, or a combination thereof, defining a flow channel narrowing in the direction of the flow. Narrowing in this concept means that the cross-section of said flow channel is continuously reduced in the direction of the flow.

According to another embodiment of said first aspect, said diverging portion (38) has a shape chosen from a tapered cone, a rounded cone, a bell-shaped cone, a flared or curved cone, or a combination thereof, defining a flow channel expanding in the direction of the flow and opening into said expansion chamber (40).

According to another embodiment of said first aspect, said throat (37) coincides with the opening into the expansion chamber (4, 40) and said diverging portion (38) is configured as an immediate release into said expansion chamber (4, 40).

According to a preferred embodiment of the first aspect, the outlet (36) and/or the transition from plasma reactor to expansion chamber is configured as or comprises a converging-diverging nozzle, also called a CD-nozzle. One example of such nozzles is the de Laval nozzle, which basically is an hour-glass shaped tube characterized by a rapid convergence, a throat, and a gradual divergence. In the converging part of the nozzle, the cross-sectional area decreases, causing the velocity of the gas to increase, and its pressure to decrease very quickly. As the gas enters a nozzle, it is moving at subsonic velocities. As the cross-sectional area contracts, the gas is forced to accelerate until the axial velocity becomes supersonic at the nozzle throat, i.e. the point of minimum cross-sectional area. As the cross-sectional area then increases in the diverging part of the nozzle, the gas expands, and the axial velocity becomes supersonic as the pressure decreases. Similarly, the temperature of the gas decreases rapidly due to the general gas law and as thermal energy is converted to kinetic energy.

The surprisingly efficient pressure drop and cooling of the gases achieve by the inventive converging-diverging flow leading to a very fast expansion cooling has many advantages. A rapid temperature drop is particularly advantageous for the synthesis of nitrogen oxides (NOx) as it minimizes or prevents unwanted backward reactions. An efficient reduction of temperature also makes it possible to use less heat-resistant and thus cheaper materials in the downstream components. The quenching effect achieved by the expansion cooling also minimizes the need for cooling through the addition of other media, e.g. quenching media, and thus dilution of the product stream is avoided.

In any plasma-based nitrogen fixation process, for example a process as shown in Fig. 1, the rapid reduction of pressure and temperature makes it possible to avoid diluting or changing the composition of the gas mixture before leading to downstream treatment (7), for example downstream treatment comprising an absorption column. Alternatively, in a single-pressure process as shown in Fig. 2, the transition from the high-temperature and high-pressure conditions in the plasma chamber (3, 30) to the reduced temperature and reduced pressure in the expansion chamber (4, 40) can be adjusted by purposeful dimensioning of the converging-diverging transition, and the downstream system, so that the temperature of the gas reaching the heat-exchanger (2) has the desired pressure and temperature for efficient pre-heating the gas led into the plasma chamber.

In a dual pressure high-temperature process as shown in Fig. 3, the converging-diverging transition can be dimensioned such, that the optimal pressure, velocity, and temperature for the turbine (5) is achieved by using the momentum and thrust of the gas building up after the supersonic expansion. Finally, in a dual-pressure low-temperature process as shown in Fig. 4, the converging-diverging transition is dimensioned so that the temperature of the gas reaching the heat-exchanger (2) has the desired pressure and temperature for efficient pre-heating the gas led into the plasma chamber, while maintaining sufficient kinetic energy for operating the turbine (5).

According to preferred embodiment of said first aspect, freely combinable with any of the above, said transition zone (35) comprises a converging outlet (36), a throat (37), and a diverging portion (38) which taken together or individually are configured to create a pressure drop to a pressure in the expansion chamber (4, 40) which is about 30 to 70 % of the absolute pressure in the plasma chamber (3, 30), preferably about 30 to 60 %, more preferably about 50 %, and most preferably about 40 % of the absolute pressure in the plasma chamber (3, 30).

Preferably the pressure in the expansion chamber (4, 40) is at least 1 bar (100 kPa) absolute pressure.

According to preferred embodiment of said first aspect, the reactor arrangement comprises at least one port (37) for tangentially introducing a secondary gas feed in addition to said main gas feed, said port (37) arranged in said plasma chamber (3, 30) to create a swirl of gas surrounding the plasma in said reaction zone (34), wherein said swirl follows the direction of the main gas and maintains a swirling motion through the outlet (36) and into the expansion chamber (4, 40). This is achieved by dimensioning the flow, velocity and pressure of the secondary gas feed, as well as the design and orientation of the inlets and the geometry of the plasma chamber and the converging-diverging outlet. This is done so that a centrifugal effect is achieved, keeping the heavier cold gas close to the wall, allowing the swirling motion and the centrifugal separation to sustain the transition through the throat. The effect is that the heavy swirling cold gas protects the inner parts of the reactor and the throat and parts of the diverging part downstream of the throat from the high temperatures of the plasma, temperatures that otherwise would destroy or damage these parts. This also gives the effect that the cold gas being transported separately through the reactor to the expansion chamber will mix with the hot gas in the expansion chamber due to turbulences generated and thus will contribute to the quenching of the gas, minimizing the need for additional gas to be introduced for the quenching.

Preferably said at least one port (371) is positioned upstream of the heating zone (32). This arrangement creates a swirling layer of cooler gas surrounding the plasma, and helps to protect the walls of the plasma chamber.

Alternatively said at least one port (372) is positioned between the heating zone (32) and the outlet into the expansion chamber (4, 40). It is also possible to arrange two ports (371, 372), one before the heating zone (32) creating a forward, downstream moving vortex, and one after said hearting zone (32) creating a partially reversed vortex. This makes it possible to create either a forward or backward moving vortex, or a combination of the two.

According to another embodiment of said first aspect, freely combinable with any of the above, at least one port (41, 411, 412, 413) for introducing a quenching medium is arranged in the expansion chamber (4, 40) for tangentially introducing quenching medium into the expanded gas, said port (41, 411, 412, 413) arranged in said expansion chamber (4, 40) to create a swirl of gas, wherein said swirl follows the direction of the main gas and maintains a swirling motion through the expansion chamber (4, 40).

According to a further embodiment, freely combinable with any of the above, said at least one port (41, 411, 412, 413) for introducing a quenching medium is arranged in a position chosen from
- a position in the wall of the diverging portion (38) of the transition zone;
- a position in an end wall of the expansion chamber (4, 40) adjacent to the outlet (36); and
- a position in a side wall of the expansion chamber (4, 40).

These alternatives give the possibility to direct a flow of quenching medium straight towards the gas stream in the axial centre of the reactor, in order to get a fast cooling effect. The right injection properties (angle, velocity etc) will cause the quench gas to be pulled into the jet stream exiting the reactor through by a Venturi effect, bringing the quenching medium to efficiently mix with and cool the hot gas in the jet stream at the axial centre.

According to a further embodiment, freely combinable with any of the above, said secondary gas and said quenching medium is the same or different, and is chosen from nitrogen, oxygen, air, and water; and wherein said quenching medium is introduced in the form of a liquid, a gas, or a mixture thereof.

A second aspect of the present disclosure relates to a method for the synthesis of nitrogen oxides (NOx) in a thermal reactor comprising a plasma chamber, a gas inlet for a main gas feed into said plasma chamber, a heater adjacent to a heating zone configured to heat said gas feed creating a plasma, a reaction zone for containing said plasma, and a gas outlet for exhaust gas, said gas inlet and gas outlet defining a direction of flow; an expansion chamber arranged downstream in fluid connection with said gas outlet, characterized in that said exhaust gas is led into a transition zone having a converging outlet, a throat, and a diverging portion, wherein the exhaust gas is accelerated to supersonic speed when passing said throat and entering into said expansion chamber.
According to an embodiment of the second aspect, said method is performed in a thermal reactor arrangement according to the first aspect or any embodiments thereof.

### Examples

Simulations have shown that the geometry of the transition or passage from the plasma reactor into the expansion chamber has significant influence on the temperature, velocity and pressure of the gas. This is illustrated in Figs. 10 - 18, showing the static temperature, velocity, and pressure as a function of the position in the diverging portion and the expansion chamber. Finally, Fig. 19 illustrates the flow pattern in a geometry where a stream of quenching medium is introduced at a position downstream of the throat, in the diverging portion of a converging-diverging nozzle. It can be seen that efficient mixing is achieved.

Without further elaboration, it is believed that a person skilled in the art can, using the present description, including the examples, utilize the present invention to its fullest extent. Also, although the invention has been described herein with regard to its preferred embodiments, which constitute the best mode presently known to the inventors, it should be understood that various changes and modifications as would be obvious to one having the ordinary skill in this art may be made without departing from the scope of the invention which is set forth in the claims appended hereto.

Thus, while various aspects and embodiments have been disclosed herein, other aspects and embodiments will be apparent to those skilled in the art. The various aspects and embodiments disclosed herein are for purposes of illustration and are not intended to be limiting, with the true scope and spirit being indicated by the following claims.

## Claims

1. A thermal reactor arrangement for the synthesis of nitrogen oxides (NOx), said reactor arrangement comprising a plasma chamber (3, 30), a gas inlet (31) for a main gas feed into said plasma chamber (30), a heater adjacent to a heating zone (33) configured to heat said gas feed creating a plasma (P), a plasma-generation zone (32), a reaction zone (34) for containing a plasma, and a gas outlet (36) for exhaust gas, said gas inlet and gas outlet defining a direction of flow, an expansion chamber (4, 40) arranged downstream in fluid connection with said gas outlet (36), said expansion chamber (4, 40) further comprising an outlet (42) configured to release expanded gas, **charcterized in that** said plasma chamber (3, 30) has a transition zone (35) leading to a converging outlet (36), a throat (37), and a diverging portion (38) opening into said expansion chamber (4, 40).

2. The thermal reactor arrangement according to claim 1, wherein said converging outlet (36) has a shape chosen from a tapered cone, a rounded cone, a bell-shaped cone, a flared or curved cone, or a combination thereof, defining a flow channel narrowing in the direction of the flow.

3. The thermal reactor arrangement according to claim 1, wherein said diverging portion (38) has a shape chosen from a tapered cone, a rounded cone, a bell-shaped cone, a flared or curved cone, or a combination thereof, defining a flow channel expanding in the direction of the flow and opening into said expansion chamber (40).

4. The thermal reactor arrangement according to claim 1, wherein said throat (37) coincides with the opening into the expansion chamber (4, 40) and said diverging portion (38) is configured as an immediate release into said expansion chamber (4, 40).

5. The thermal reactor arrangement according to claim 1, wherein said outlet (36) comprises a converging-diverging nozzle (CD-nozzle).

6. The thermal reactor arrangement according to claims 1, wherein said transition zone (35), comprising a converging outlet (36), a throat (37), and a diverging portion (38), is configured to create a pressure drop to a pressure in the expansion chamber (4, 40) which is about 30 to 70 % of the absolute pressure in the plasma chamber (3, 30), preferably about 30 to 60 %, more preferably about 50 %, and most preferably about 40 % of the absolute pressure in the plasma chamber (3, 30).

7. The thermal reactor arrangement according to claim 1 or 6, wherein the pressure in the expansion chamber (4, 40) is at least 1 bar (100 kPa) absolute pressure.

8. The thermal reactor arrangement according to claim 1, further comprising at least one port (37) for tangentially introducing a secondary gas feed in addition to said main gas feed, said port (37) arranged in said plasma chamber (3, 30) to create a swirl of gas surrounding the plasma in said reaction zone (34), wherein said swirl follows the direction of the main gas and maintains a swirling motion through the outlet (36) and into the expansion chamber (40).

9. The thermal reactor arrangement according to claim 8, wherein said at least one port (37) is positioned upstream of the heating zone (33).

10. The thermal reactor arrangement according to claim 8, wherein said at least one port (37) is positioned between the heating zone (33) and outlet into the expansion chamber (4, 40).

11. The thermal reactor arrangement according to claim 1, wherein at least one port (41, 411, 412, 413) for introducing a quenching medium is arranged in the expansion chamber (4, 40) for tangentially introducing quenching medium into the expanded gas, said port (41, 411, 412, 413) arranged in said expansion chamber (4, 40) to create a swirl of gas, wherein said swirl follows the direction of the main gas and maintains a swirling motion through the expansion chamber (4, 40).

12. The thermal reactor arrangement according to claim 11, wherein said at least one port (41, 411, 412, 413) for introducing a quenching medium is arranged in a position chosen from
- a position in the wall of the diverging portion (38) of the transition zone;
- a position in an end wall of the expansion chamber (4, 40) adjacent to the outlet (36); and
- a position in a side wall of the expansion chamber (4, 40).

13. The thermal reactor arrangement according to claim 8 or 11, wherein said secondary gas and said quenching medium is the same or different, and is chosen from nitrogen, oxygen, air, and water; and wherein said quenching medium is introduced in the form of a liquid, a gas, or a mixture thereof.

14. A method for the synthesis of nitrogen oxides (NOx) in a thermal reactor comprising a plasma chamber, a gas inlet for a main gas feed into said plasma chamber, a heater adjacent to a heating zone configured to heat said gas feed creating a plasma, a reaction zone for containing said plasma, and a gas outlet for exhaust gas, said gas inlet and gas outlet defining a direction of flow; an expansion chamber arranged downstream in fluid connection with said gas outlet, **characterized in that** said exhaust gas is led into a transition zone having a converging outlet, a throat, and a diverging portion, wherein the exhaust gas is accelerated to supersonic speed when passing said throat and entering into said expansion chamber.

15. The method according to claim 14, wherein the method is performed in a thermal reactor arrangement according to any one of claims 1 - 13.
